# EUROPEAN PATENT APPLICATION

(11) **EP 1 400 169 A1**
(43) Date of publication of application: **24.03.2004**
(21) Application number: 01936837.2
(22) Date of filing: 01.06.2001
(51) Int. Cl.: A01K 13/00, A01K 29/00, G06F 17/30, G06K 7/00

(54) **ANIMAL IMAGE ADMINISTRATING METHOD, AND IMAGE RECORDING METHOD**

(71) Applicant: SURGE MIYAWAKI CO., LTD., Tokyo 141-0022 (JP)
(72) Inventor: MIYAWAKI, Yutaka, Setagaya-ku, Tokyo 156-0044 (JP)
(74) Representative: Patentanwälte Ruff, Wilhelm, Beier, Dauster & Partner
(86) International application number: PCT/JP2001/004676
(87) International publication number: WO 2002/098214

(57) **Abstract**

A digital picture is obtained of an animal together with a barcode. By reading the individual identification code of an animal from this digital picture, it becomes possible to quickly and accurately manage pictures of animals. When photographing the unique, photographable part of an animal together with a barcode recording individual identification data of the animal by a digital camera etc. to obtain a digital picture and storing the digital pictures of the obtained animals from a recording medium to the storage medium of a computer for management together with file names, computer software reads the barcode from the digital picture or by reading the screen display of the computer or printed image by a barcode reader and prepares a file name for the digital picture based on the individual identification information of the animal recorded in the barcode.

## Description

### TECHNICAL FIELD

The present invention relates to a method of management of pictures and method of recording pictures of animals, more particularly relates to a method for management of livestock such as dairy cattle by pictures and a method of recording the pictures.

### BACKGROUND ART

For registration of livestock, Japan has previously known the use of nose prints as with its cattle registration association or use of the pattern of black and white spots of Holstein dairy cattle as with its Holstein registration association.

On the other hand, regions other than Japan, for example, Europe, have used the pattern of spots of Holsteins in the same way as in Japan and also tattoos and ear punching. Recently, however, it has been registering dairy cattle using ear tags.

If trying to register a pattern of black and white spots of the body of a Holstein dairy cow by drawing the pattern by hand, special skill and time are required for hand drawing. Therefore, recently, the method of recording and registering the pattern of black and white spots has been experimented with. The photographs are sometimes recorded as usual negative film and sometimes recorded as instant photographs. Further, photographing the nose prints of cattle is also being studied.

The problem when photographing patterns of black and white spots or nose prints is that when taking a large number of photographs, it is unclear which photographs belong to which cattle. Therefore, when photographing the pattern of black and white spots of the body of a Holstein, the method has been adopted of placing a large board with a number at the side of the animal, photographing it together with the animal, and using it later for identification of the animal. The number of digits of the number in this method, however, is at most up to three digits. It is difficult to fit the nine to 10 digit or greater number required for registration on a board and therefore this method has not been put to practical use.

Further, for nose prints, there are experiments being conducted with photographing a nose print by a digital camera instead of transferring the nose print to paper by ink, inputting the picture of the digital camera into a computer, and using this for registration. In these experiments as well, the problem of how to sort and guarantee the pictures has not yet been solved.

In both cases, when preparing a registration certificate or ledger of the patterns of black and white spots or the nose prints of cattle, the ledger has to be prepared by hand for each head of cattle by sight. Therefore, there were the problems that time was taken and mistakes were made in entries.

### DISCLOSURE OF THE INVENTION

Therefore, an object of the present invention is to provide a method of management of pictures and method of recording pictures of animals which enable animals to be managed by pictures quickly and accurately by managing individual animals by using a digital camera to photograph animals together with barcode information to obtain digital pictures and by using the digital picture data recorded on a medium, at which time reading the information of a photographed barcode at the computer side and preparing a file name of the digital picture based on the information.

The characterizing features of the present invention for achieving the above object are shown below in first to 13th aspects of the invention.

The first aspect of the invention comprises a method of managing animals by pictures comprising photographing a unique, photographable part of an animal and a barcode recording individual identification information of the animal together or separately to obtain a digital picture and managing obtained digital pictures of animals recorded together with file names on a storage medium, at which time reading the barcode from the digital picture and preparing a file name of the digital picture based on the individual identification data of the animal recorded in the barcode.

The second aspect of the invention comprises the first aspect comprising, when photographing an animal together with a barcode recording individual identification data of the animal, photographing the barcode placed at a predetermined specific position, reading the barcode from the digital picture, and analyzing by software the digital data of an address corresponding to a specific position of the storage area of the storage medium.

In this case, when placing the barcode recording the individual identification data of an animal at a predetermined specific position and photographing this together with the animal, it is possible to use a multifocus camera able to focus on at least two barcodes and locations of animals.

The third aspect of the invention comprises the first aspect comprising a step of reading the barcode from the digital picture and scanning the picture data of the digital picture in the vertical direction, horizontal direction, and slanted direction to obtain a predetermined number of data strings, a step of searching for whether there is a specific data string expressing characteristics of a barcode in the obtained data strings, and a step of analyzing a data string when finding a data string expressing the barcode in the read data strings to read the content of the barcode.

The fourth aspect of the invention comprises a method of using a data processing apparatus to manage animals by pictures comprising photographing an animal and a barcode recording individual identification information of the animal together or separately to obtain a digital picture and managing obtained digital pictures of animals in a data processing apparatus recorded together with file names on a storage medium, at which time displaying a digital picture on a display unit of the data processing apparatus, reading the barcode from a displayed digital picture by a barcode reader to input that data to the data processing apparatus, and preparing a file name of that digital picture recorded on a storage medium based on the individual identification data of the input animal.

The fifth aspect of the invention comprises a method of using a data processing apparatus to manage animals by pictures comprising photographing an animal and a barcode recording individual identification information of the animal together or separately to obtain a digital picture and managing obtained digital pictures of animals in a data processing apparatus recorded together with file names on a storage medium, at which time printing a digital picture, reading the barcode in the printed picture by a barcode reader to input that data to the data processing apparatus, and preparing a file name of that digital picture recorded on a storage medium based on the individual identification data of the input animal.

The sixth aspect of the invention comprises any of the first to fifth aspects characterized by making the part where the individual identification data of the animal is recorded in the file name prepared based on the individual identification data of the animal read from the barcode impossible to rewrite or making it possible to confirm that the fact that it is an original picture is certified.

The seventh aspect of the invention comprises any of the first to sixth aspects wherein the storage medium is a database connected to a computer of a management organization of a specific region and the digital picture of an animal having a file name attached prepared based on the individual identification data of the animal read from the barcode is recorded in a management ledger of the database.

The eighth aspect of the invention comprises the seventh aspect wherein the management ledger is made public so that it may be jointly used on a computer network connected to the database.

The ninth aspect of the invention comprises any of the first to third aspects wherein the file name is a file name showing a photograph number in a digital picture photographic apparatus for photographing animals having a barcode reading function.

The 10th aspect of the invention comprises photographing a certain object together with a barcode recording identification data of that object together or separately to obtain a digital picture and storing obtained digital pictures together with file names in a storage medium, at which time reading a barcode from a digital picture or from a separately photographed barcode picture and incorporating a file name of that digital picture into at least part of the data recorded in the read barcode to prepare a file name.

The 11th aspect of the invention comprises photographing a certain object together with a barcode recording identification data of that object together or separately to obtain a digital picture, displaying the obtained digital pictures on a display unit, reading a barcode from the displayed picture by a barcode reader, and recording and storing photographed digital pictures together with file names in a storage medium, at which time incorporating a file name of a digital picture into at least part of the data recorded in a barcode read by the barcode reader to prepare a file name.

The 12th aspect of the invention comprises photographing a unique, photographable part of an animal by photographing a number or letters expressing individual identification data of that animal placed so as to be shot at a specific predetermined position of the photographed picture to obtain a digital picture and managing obtained digital pictures of animals recorded together with file names in a storage medium, at which time reading the number or letters expressing the individual identification data from a digital picture by an OCR function of software and preparing a file name of the digital picture based on individual identification data of the animal recorded in the read number or letters.

The 13th aspect of the invention comprises any of the first to 12 aspects comprising, when obtaining a digital picture of an animal or object, including in the digital picture electronic tamperproof data preventing rewriting of digital data in the digital picture or showing that the digital data has been rewritten.

According to the present invention, when an object such as an animal is photographed together with a barcode recording identification data of the object or separately to obtain a digital picture and storing obtained digital pictures together with the file names in a storage medium, a barcode is read from a digital picture and a file name of the digital picture is prepared based on the data recorded in the read barcode. As a result, when a data processing apparatus manages objects in digital pictures, the file name of a file stored in the storage medium is quickly and accurately input based on the data recorded in the barcode, so file management becomes easy.

Note that the content of the barcode in a digital picture can be read directly from data by data processing of the digital picture data using software, but it is also possible to display the picture data once on a display or print it out by a printer, then read the barcode part by a barcode reader. In this case, the data read by the barcode reader is fetched and the file name of the digital picture is prepared based on the read data. Further, it is also possible to photograph a number or letters recording individual data of an animal placed or electrically displayed at a specific position of a photographed picture of an animal instead of a barcode, read the number or letters by an OCR function of software, and prepare the file name of a digital picture based on that data.

### BRIEF DESCRIPTION OF THE DRAWINGS

These and other objects, features, advantages, etc. of the present invention will be explained in detail in accordance with the attached drawings, wherein:
FIG. 1 is an explanatory view of an example of photographing an animal using a barcode for working the method of management of pictures of the present invention.
FIG. 2A is a view of the photographed picture obtained by the method of photography shown in FIG. 1.
FIG. 2B is a view of an example where the barcode of FIG. 2A is a two-dimensional barcode.
FIG. 3 is a view of an example of a monitor screen of a digital camera employing the method of management of pictures of animals of the present invention.
FIG. 4 is a block diagram showing three routines for the method of management of pictures of animals of the present invention.
FIG. 5 is a view of an example of a registration certificate of an animal obtained by the method of management of pictures of animals of the present invention.
FIG. 6 is a system diagram of the configuration of a regional network in the case for managing by region animal registration certificates prepared by the method of management of pictures of animals of the present invention.
FIG. 7 is a system diagram of the configuration of an on-line network in the case of connecting regional networks of FIG. 6 on the national scale of Japan.
FIG. 8 is a view of a search screen of a database when storing in the database and managing animal registration certificates prepared by the method of management of pictures of animals of the present invention.
FIG. 9A is a view of a treatment ledger showing an example of a ledger preparable by the method of management of pictures of animals of the present invention.
FIG. 9B is a view of an example of a milk inspection ledger showing an example of a ledger preparable by the method of management of pictures of animals of the present invention.
FIG. 10 is a view of a modification of a method of photography of an animal in the method of management of pictures of animals of the present invention.
FIG. 11 is a view of a modification of a method of photography of an animal in the method of management of pictures of animals of the present invention.
FIG. 12 is a is a view explaining a method of reducing the amount of data in storage of data after photography of an animal in the method of management of pictures of animals of the present invention.
FIG. 13A is a view of an example of application of the method of management of pictures of animals of the present invention to the nose print of an animal.
FIG. 13B is a view of an example of a registration certificate obtained by photographing a nose print of FIG. 13A.

### DESCRIPTION OF THE PREFERRED EMBODIMENTS

Embodiments of the present invention will be described in detail below while referring to the attached figures. First, however, a summary of the method of the present invention will be given.

An example of realization of the method of the present invention will be explained taking as an example an animal. In the method of the present invention, a digital camera or a digital video camera able to output moving pictures and still pictures etc. is used to photograph an animal together with a barcode registering individual identification data of the animal and store the same as a digital image in a camera recording medium such as a magnetic disk, flash memory, etc. Next, the digital image is registered in a ledger stored in a database such as a storage medium like a hard disk or optical disk of a data processing apparatus of a predetermined organization for registration of photographed animals. At this time, in the present invention, part of the file name of the ledger includes the number of the individual identification data registered in the barcode photographed together with the animal.

The digital data of the animal stored in the recording medium of the digital camera can be transferred from the camera to the data processing apparatus by insertion of the recording medium built into the camera into the data processing apparatus or through a USB cable or other communication cable. The individual identification data of the animal recorded in the barcode photographed together with the animal can be read by the camera side or by the data processing apparatus side. Further, when photographing the animal and the barcode showing the individual identification data of the animal using a system provided with combined functions of the two, it is also possible not to photograph them together, but to photograph them separately to obtain digital pictures, for example, possible to first photograph the ear tag or card with the barcode showing the individual identification data of the animal attached and then photograph the characterizing part of the animal. When videotaping, it is possible to photograph the characterizing part of the animal from a distance and then continue and photograph the barcode.

Next, the method of the present invention will be explained in detail using the drawings.

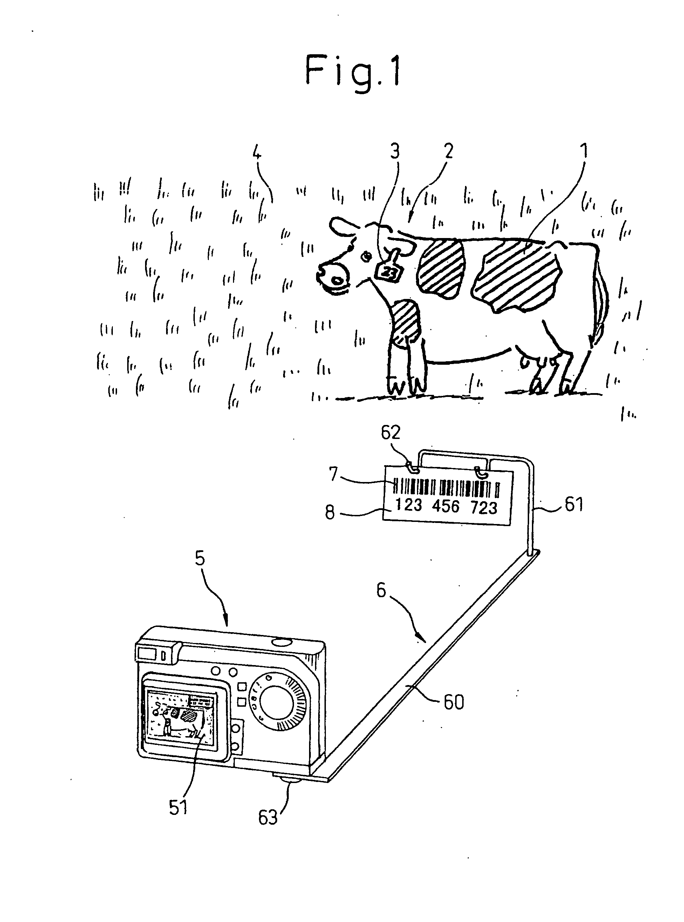

FIG. 1 is an explanatory view showing an example of photographing an animal using a barcode for working the method of management of pictures of animals of the present invention. Here, as an animal, the explanation will be given taking as an example dairy cattle 2 with different patterns of black and white spots 1. Further, the ear of each dairy cattle 2 raised on a farm has an ear tag 3 with the management number of the dairy cattle 2 of the farm. The dairy cow 2 is photographed aiming for a shot at a location such as a pasture 4 where there are no other dairy cows or where nothing superfluous is captured in the background.

In this embodiment, to digitalize the picture of a photographed dairy cow 2, the animal is photographed by using a digital camera 5 recording the picture not by film, but by a digital signal on a recording medium. As the recording medium, there are portable magnetic disks and cards or sticks using nonvolatile IC memories (flash memories). When photographing dairy cattle 2 by a film type camera, after photography, the picture can be exposed and printed on paper, then the image transferred to the paper read by a scanner to prepare a digitalized picture.

The digital camera 5 is given an attachment 6 on its bottom. This attachment 6 is comprised of a bar 60 extending to the front of the digital camera 5, an L-shaped arm 61 projecting upward at the front end of the bar 60, hooks 62 provided at the front end and center of the arm 61, and a screw 63 for attaching the base of the bar 60 to the bottom of the digital camera 5. Further, the two hooks 62 are designed to allow a plate 8 printed with a barcode 7 to be hung from them. The plate 8 is printed with the individual identification number of the cattle in the form of the barcode 7. Each time photographing dairy cows 2, the plate 8 is switched with a plate 8 printed with the individual identification number of that cow.

The length of the bar 60 at the attachment 6 and the shape of the arm 61 are preset so that the plate 8 hung from the hooks 62 is captured at the top left of the photographed picture of the digital camera 5. The photographed position of the plate 8 can be confirmed by the monitor screen 51 provided at the back of the digital camera 5. As a preferable picture photographed, one where the dairy cow 2 is photographed from the side so as not to overlap the plate 8 photographed at the top right and where the pattern of black and white spots 1 and the number on the ear tag 3 can be identified is preferable.

Note that in FIG. 1, the explanation was given of a format where the plate 8 was hung from the hooks 62, but the method of attachment of the plate 8 to the arm 61 is not limited to this hanging method. For example, it is also possible to form the arm 61 slightly larger in width and temporarily fix the plate 8 to the arm 62 by two-sided tape. Further, in this embodiment, use was made of a plate 8 printed with only the barcode 7, but it is also possible to provide a registration card of the dairy cattle 2 printed at the bottom left corner with a barcode and photograph the card attached to the arm 61 etc. so that only the bottom left of the card is caught in the digital camera 5.

Note that in the case of a camera which is only able to be focused at one location, the digital camera 5 is adjusted in advance so as to focus on the barcode 7 on the plate 8. Further, in the case of a multifocus digital camera 5 able to take photographs focused shifting to two or more locations, the camera is focused on the barcode on the plate 8 and two dairy cattle 2.

Further, if the barcode 7 on the plate 8 is made to match the unique number printed on the unchangeable ear tag 3 of the dairy cow 2 (not shown), the reliability of the data becomes more reliable.

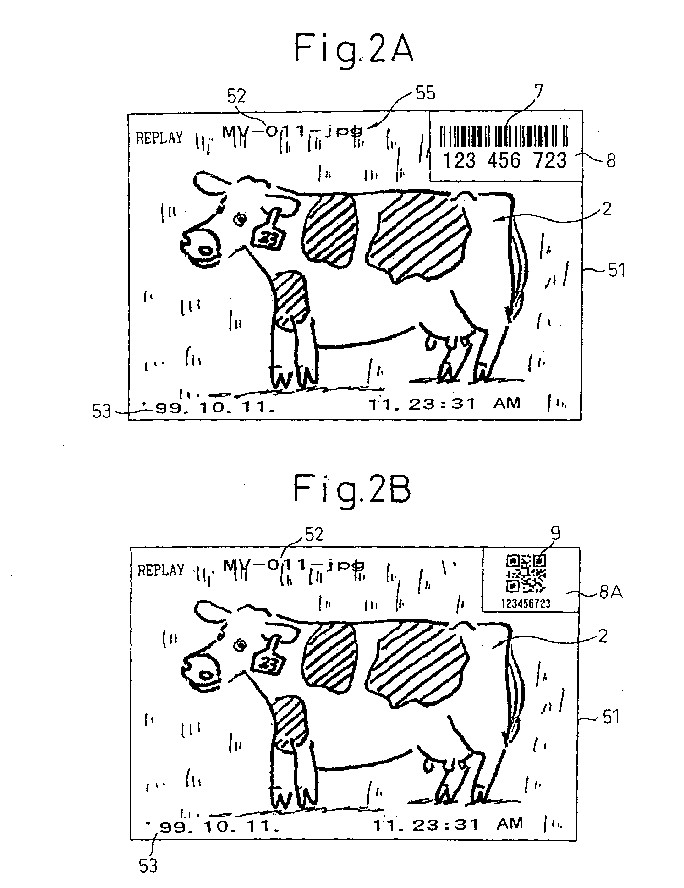

FIG. 2A is a view of an embodiment of a photographed picture obtained by a digital camera by the method of photography shown in FIG. 1. The monitor screen 51 of the digital camera 5 of FIG. 1 displayed the state of replay after photography. At the time of replay, the monitor screen 51 displays the word "REPLAY" showing that the screen is a replay, the file name 55 including photographed frame number data 52 of the screen, and the photographed date, time, and other photographic data 53. Note that the photographic data 54 is secondary data of the digital picture and is not an essential requirement of the present invention. It need not be displayed.

Further, in this embodiment explained in FIG. 1, the explanation was given of the example of photography with the plate 8 printed with a barcode (one dimensional) 7 hung from two hooks 62 of the attachment 6, but it is also possible to hang a plate 8A printed with a two-dimensional barcode 9 on the hooks 62. FIG. 2B shows a picture displayed on a monitor screen 51 of a digital camera 5 of FIG. 1 in the case of photography hanging a plate 8A printed with a two-dimensional barcode 9. In this case as well, the monitor screen 51 displays the word "REPLAY" showing that the screen is a replay, the photographed frame number data 52 of the screen, and the photographed date, time, and other photographic data 53. Further, the two-dimensional barcode need not be printed on the plate 8A as explained above. It is also possible to print a two-dimensional barcode at the bottom left corner of the card and photograph it attached to the attachment 6 so that just the two-dimensional barcode is captured.

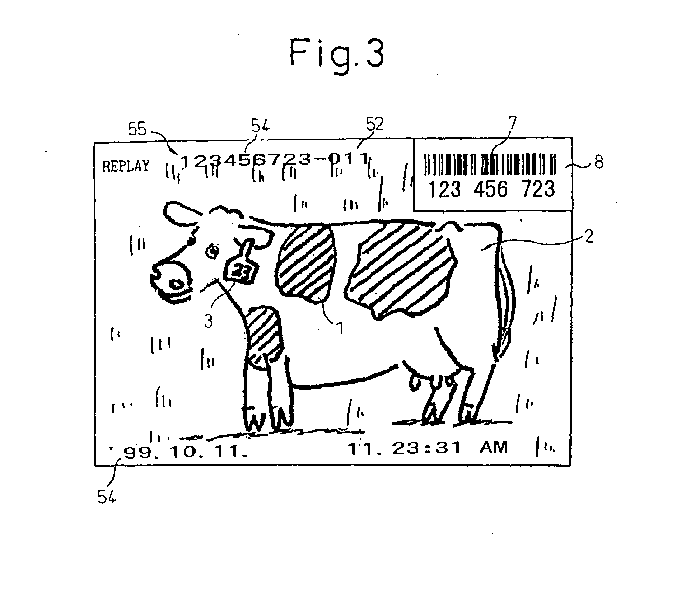

FIG. 3 is a view of another embodiment of a photographed picture shot by a digital camera 5 by the method of photography shown in FIG. 1. This embodiment shows the case where the digital camera 5 of FIG. 1 provided with the function of searching for a barcode in a digital picture and reading the data. The information in the barcode is inserted into part of the photographed frame number data 52 of the digital camera 5. Therefore, for example, in this embodiment, the part at the top left of the monitor screen 51 after photography displays the word "REPLAY" showing that the photographed picture is a replay and "123456723-011" showing the file name 55 of the photographed picture.

The file name 55 in this embodiment is comprised of the individual identification data 54 ("123456723") read from the barcode 7 after photography and the photographed frame number data 52 of the screen shown by the "011" showing that the photographed data is the "11th picture" in the camera. Therefore, the individual identification data 54 ("123456723") included in the file name 55 matches with the individual identification data ("123456723") described below the barcode 7. Note that the photographed date or time or other photographed data 53 is displayed at the bottom of the photographed picture as in the past. Further, the photographed frame number data 52 need not be inserted into the file name.

Further, conversely, when the barcode includes information more than the information required for identification of the individual animal, the file name can be displayed cutting out only the number required for individual identification.

If the file name of the digital picture photographed by the digital camera 5 in this way includes individual identification data shown by the photographed barcode 7, when inserting the storage medium of the digital camera 5 in a data processing apparatus, that is, a personal computer, and preparing a file using the digital picture at the personal computer side, it is possible to easily incorporate part of the file name of the digital picture in the file name. As a result, since the digital picture data of the dairy cattle 2 is used at the personal computer side to prepare the registration file and the file name when managing the file accurately includes the individual identification data of the dairy cattle 2, input mistakes disappear and management becomes accurate and easy.

On the other hand, when the digital camera 5 of FIG. 1 is not provided with the function of reading the individual identification data recorded in the barcode in a digital picture, the recording medium recording the digital picture photographed by the digital camera 5 is inserted into the data processing apparatus, that is, the personal computer, and the digital picture data of the dairy cattle 2 is used at the computer side to prepare the registration file. That is, the individual identification data included in the barcode recorded in the recording medium is read at the computer side and the file name for file management is prepared based on the individual identification data read from the barcode. This embodiment will be explained next.

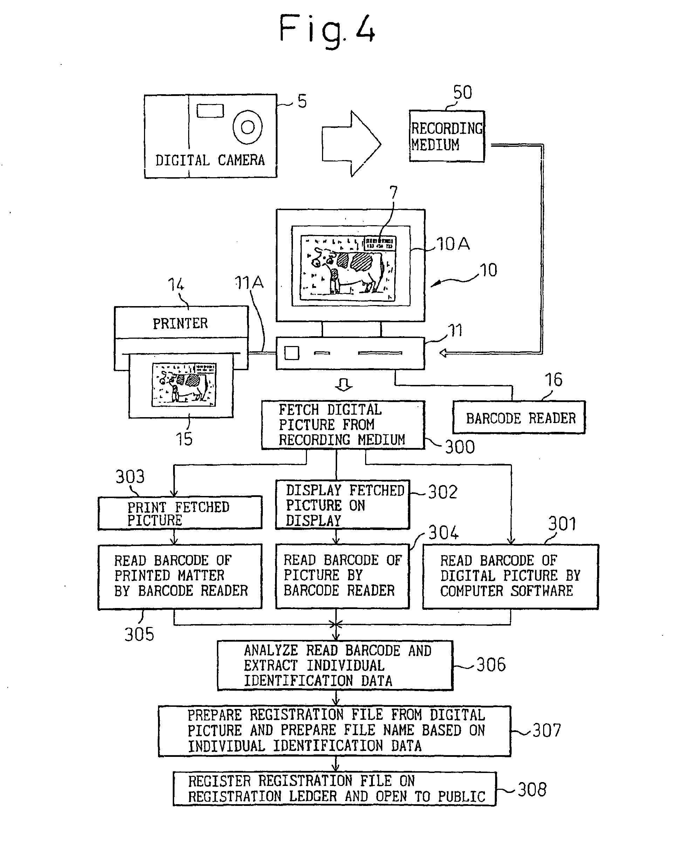

FIG. 4 explains three routines of a method of management of pictures of animals of the present invention using a computer. The recording medium 50 recording the digital picture shown in FIG. 2A photographed by the routine explained in FIG. 1 is inserted into a slot provided in the body 11 of the computer 10. In this embodiment, the computer 10 has a barcode reader 16 connected to it. Reference numeral 10A is a display of the computer 10, while 14 is a printer connected to the computer proper 11 by a cable 11A.

At the computer 10, a not shown keyboard or mouse or other input device is operated to input the photographed digital picture into the computer 10 as shown at step 300. The computer 10 uses the digital picture input from the recording medium 50 to prepare a registration file and prepares a file name of the registration film by any of the following three methods.

### (1) Method Using Software

After inputting the photographed digital picture into the computer 10 at step 300, at step 301, software of the computer 10 is used to read the barcode from the digital picture. The barcode is read, as explained in FIG. 1, by photographing the barcode 7 so as to be captured at a predetermined position such as the top right of the screen when photographing the dairy cattle 2 together with a barcode recording its individual identification data. If determining the position where the barcode 7 is captured in advance in this way, by reading out as a data string the digital data at an address of the storage area corresponding to the recording position of the information of the barcode in the storage area (bit map) of the storage medium of the computer 10 storing the digital picture input from the storage medium from the digital camera 5 and judging whether the read data expresses white or black, the structure of the thin lines and thick lines of the barcode is read from the data string. Further, if analyzing the structure of the barcode by software, it is possible to read the individual identification data of the dairy cattle 2.

Note that when photographing a dairy cow 2 together with a barcode 7 recording its individual identification data, when the position of the barcode 7 is not predetermined, the memory area (bit map) of the storage medium of the computer 10 storing a digital picture from the storage medium of the digital camera 5 is scanned a plurality of times at different locations in the vertical direction, horizontal direction, and slanted direction to obtain a predetermined number of data strings. Further, whether there is a specific data string expressing the characteristics of a barcode is present in the fetched data strings is searched for. When this search turns up a data string expressing a barcode in the fetched data strings, that data string is analyzed to read the thin lines and thick lines of the barcode.

The above explanation relates to a general barcode, but in the case of a two-dimensional barcode prepared from a vertical/horizontal matrix or positional coordinates, a specific symbol expressing the characteristics of a barcode is found from the image to read the data displayed by contrast.

Note that the software for reading the barcode can be installed into the computer by writing the software into a usual magnetic disk or other recording medium of course or a memory board or memory card and loading this into the computer. Similarly, it is possible to install the software in a digital camera or digital video camera by a similar method or add a card or other hardware to add similar functions.

### (2) Method of Displaying Digital Picture on Display of Computer

After inputting the photographed digital picture into the computer 10 at step 300, at step 304, the display 10A of the computer displays the fetched digital picture. This can be performed by operation by a not shown keyboard or mouse or other input device or special continuous image call-up software. When the digital picture is displayed in this way, next, at step 304, a barcode reader 16 connected to the computer 10 is placed against the part of the display 10A displaying the barcode 7 to read the individual identification data from the barcode 7 in the displayed picture and input the necessary data there to the computer 10. In this way, with the second method, the barcode reader 16 is used to read the barcode 7 on the display screen of the display 10A.

With this method, it is possible to read the barcode no matter what position in the picture where the barcode is photographed.

### (3) Method of Printing Digital Picture by Printer of Computer

After inputting the photographed digital picture into the computer 10 at step 300, the input digital picture is printed on paper 15 by a printer 14 connected to the computer 10 at step 303. This printing can be performed by operation by a not shown keyboard or mouse or other input device or special continuous image call-up software. If the digital picture is printed in this way, next, at step 305, a barcode reader 16 connected to the computer 10 is placed against the part of the paper 15 where the barcode 7 is printed to read the individual identification data from the barcode 7 in the printed image and input the necessary data in it to the computer 10. In this way, with the third method, the barcode reader 16 is used to read the barcode 7 from printed matter.

If reading a barcode 7 from a digital picture by any of the above three methods, at the next step 306, the structure of the barcode is analyzed by software to read the individual identification data of dairy cattle 2.

Next, at step 307, a registration certificate (registration file) of the dairy cattle is prepared from the fetched digital picture. Further, the file name of the registration file is prepared based on the individual identification data of the dairy cattle 2 read from the barcode 7 at step 306. The registration file attached with the file name prepared in this way is registered in a registration ledger to prepare a database at step 308. The database of the computer 10 can be made public to third parties as well by connection to a network.

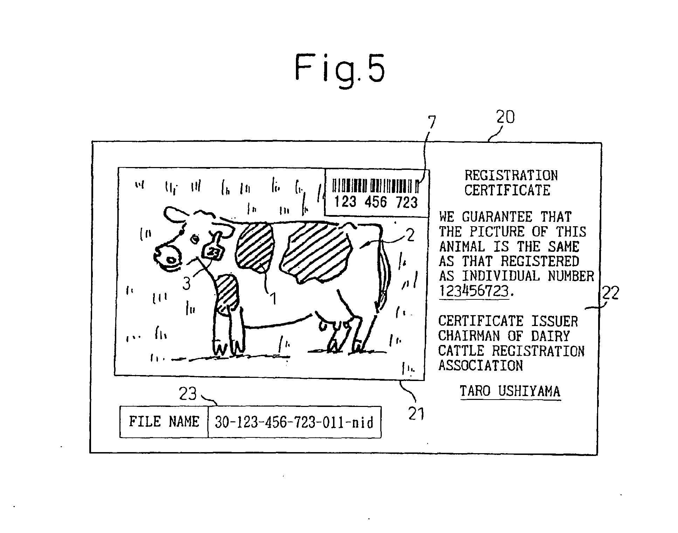

FIG. 5 shows an example of a registration certificate 20 of an animal of a registration file obtained by the method of management of pictures of animals explained above. The animal registration certificate 20 records a picture 21 of the dairy cow 2 enabling identification of the pattern of black and white spots 1, ear tag 3, and barcode 7, a confirmation certificate 22, and a file name 23. This registration certificate 20 can be easily viewed by related parties by accessing the database through their computers. Part of the file name 23 contains the individual identification data of the dairy cow 2 shown by the barcode 7. This file name 23 can be made to automatically include individual identification data of the dairy cow 2 shown by the barcode 7 by software, so compared with the conventional case of preparation of file names by manual input, it is possible to accurately prepare file names. Further, the displayed form is not limited to this format and can of course be made any necessary format.

Note that the content of the registration certificate 20 shown in FIG. 5 is protected after registration of the individual identification data of the dairy cattle 2 once and is prevented from change of the data later. Further, if part of the content of the registration certificate 20 is changed, it is possible to make this understandable by not displaying the registration certificate 20, displaying the time of the change, etc. to ensure the credibility of the content of the picture.

Further, in recent years, technology has been announced enabling the photographed data, the photographer's name, the camera manufacturer and manufacturing number, or encrypted data (digital signature) taking the place of a signature to be automatically buried as an "electronic watermark" in a picture photographed by a digital camera and enabling special software to be used to view the buried content. Further, "electronic data fixing" technology for performing certain processing to completely fix the individual digital data in an image to prevent correction or "electronic data tamper alarm" technology for indicating that data has been changed have been proposed. Therefore, if incorporating this technology in the method of the present invention, it is possible to prevent illicit rewriting of data or touchup of images.

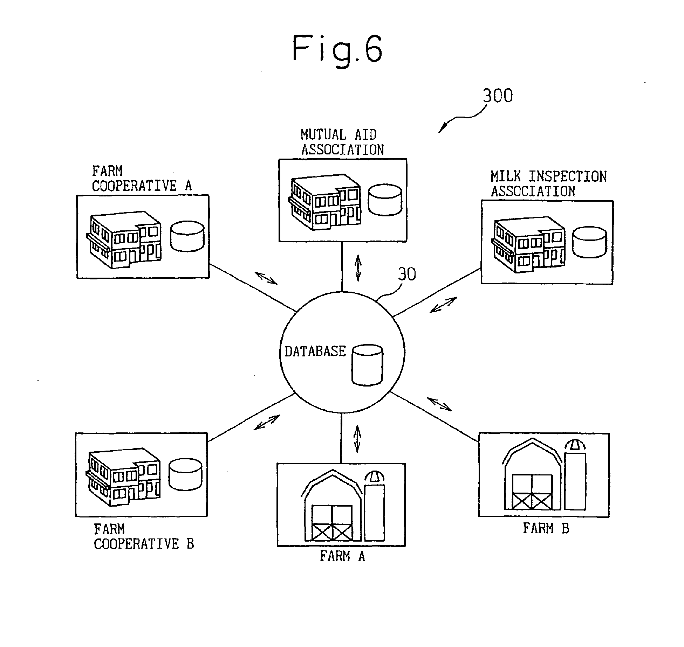

The animal registration certificate 20 shown in FIG. 5 can be received at a dairy cattle management organization 30 to form a wide region database as shown in FIG. 6. A management organization 30 may be established in each region or may be established covering everything at a nationwide scale. Further, when establishing a database of a management organization 30 in each region, for example, it is possible to establish a regional database as part of a farm cooperative, mutual aid association, or other management organization and connect the computers of a large number of farms, regional farm cooperatives, mutual aid associations, or milk inspection associations to the database to create a regional network 300. By doing this, farms, farm cooperatives, mutual aid associations, or milk inspection associations can check the registration certificate of a desired dairy cow on line.

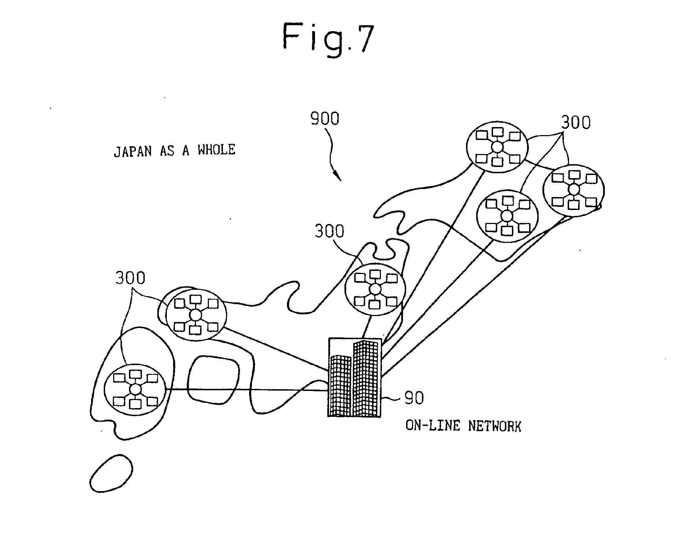

Further, as shown in FIG. 7, if connecting the networks 300 of the different regions on line and establishing a national management organization 90 at a predetermined region, it is possible to form a nationwide on-line network 900 regarding dairy cattle.

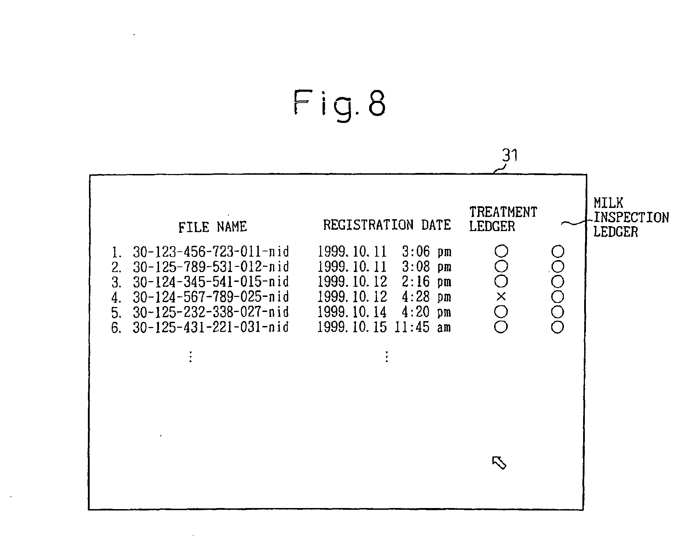

FIG. 8 shows an example of the search screen 31 of the database 30 in dairy cattle networks 300 and 900 configured as shown in FIG. 6 or FIG. 7. Related parties can use their own computers to connect to the database provided at the dairy cattle management organization 30 or 90 and input their password to call up the search screen 31 shown in FIG. 8. Further, if viewing the management screen 31 to select the file name of the desired dairy cow, it is possible to call up the registration certificate 20 of the animal as shown in FIG. 5 on the screen of the computer of a related party and confirm the pattern of black and white spots 1 or ear tag 3 of the dairy cow called up.

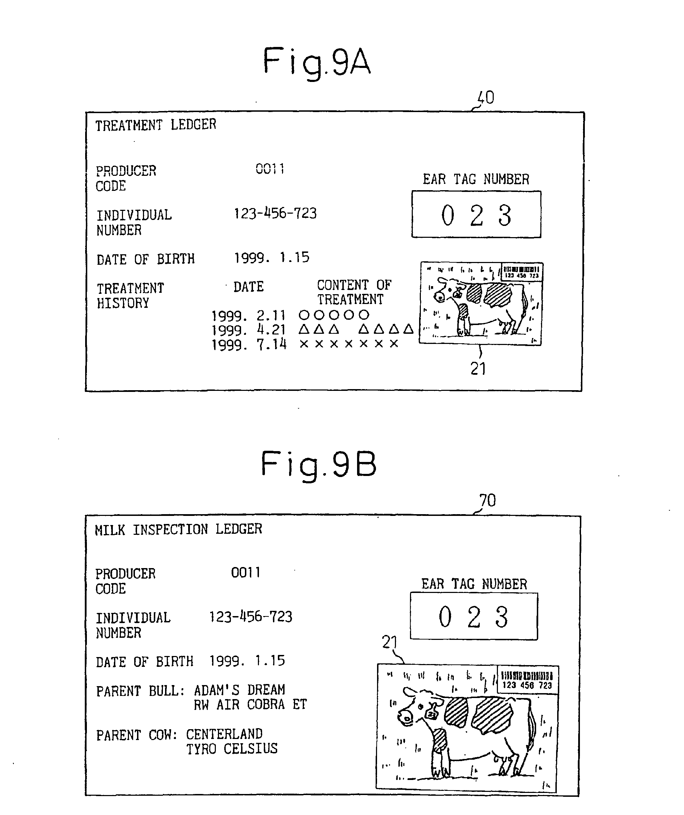

FIG. 9A and FIG. 9B show examples of other ledgers which can be prepared using the registration certificate 20 of an animal prepared by the method of management of pictures of animals of the present invention, wherein FIG. 9A shows a treatment ledger 40, while FIG. 9B shows a milk inspection ledger 70. The treatment ledger 40 in this case describes the ear tag number of the dairy cattle, a picture 21 of the dairy cattle enabling identification of the pattern of black and white spots of the dairy cattle, the producer code of the dairy cattle, the individual number of the dairy cattle, its date of birth, and its treatment history. Further, the milk inspection ledger 70 of this example describes the ear tag number of the dairy cattle, a picture 21 of the dairy cattle enabling identification of the pattern of black and white spots of the dairy cattle, the producer code of the dairy cattle, the individual number of the dairy cattle, its date of birth, and the names of the parent bull or cow. The individual number of picture of the dairy cattle is made to be automatically copied from the registration certificate 20.

The existence of such a treatment ledger 40 or milk inspection ledger can also be described in the search screen 31 of the database 30 explained in FIG. 8. By doing this, if connecting to a database, displaying the search screen 31, and searching from the search screen for the registration certificate 20 or the treatment ledger 40 or milk inspection ledger 70, it is possible to confirm a match of the individual number and ear tag of the dairy cattle, confirm the lineage of the dairy cattle, trace any disease of the dairy cattle, etc.

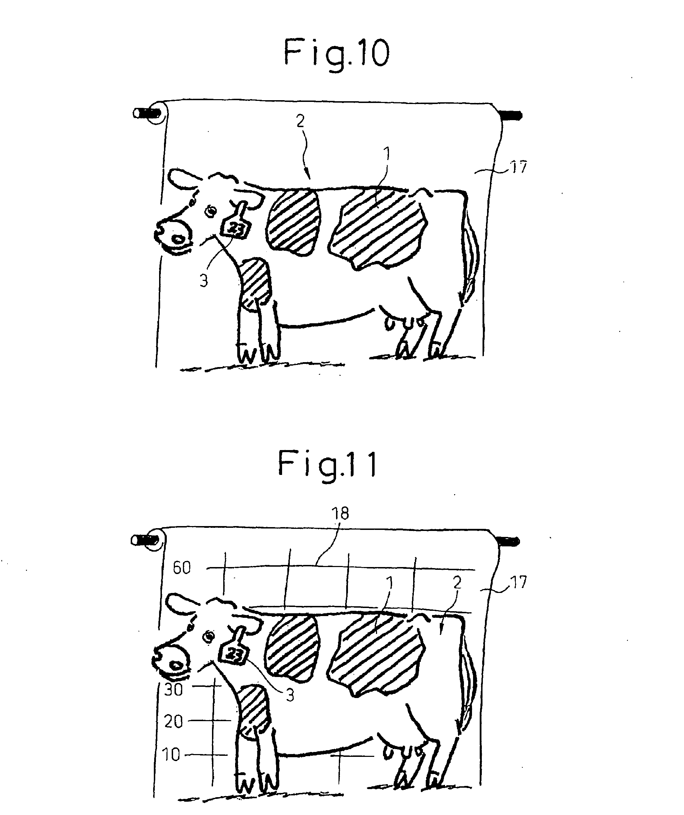

FIG. 10 shows a modification of the method of photographing an animal in the method of management of pictures of animals of the present invention. In the example of photographing a dairy cow 2 explained in FIG. 1, the digital picture was obtained by photographing the dairy cow 2 aiming for its being in a pasture 4, but if the digital picture is recorded in the recording medium as it is, even the unnecessary pasture 4 ends up being converted to a digital picture and recorded in the recording medium, so the amount of data of one digital picture ends up becoming larger. If the pattern of black and white spots 1 and the number of the ear tag 3 are correctly converted to a picture when obtaining a digital picture of dairy cattle 2, a picture of the background is unnecessary. Therefore, in the example shown in FIG. 10, when photographing the dairy cattle 2, a white or blue screen 17 is placed behind the dairy cattle 2 and the dairy cattle 2 is photographed to reduce the amount of data of the background when creating the digital picture so as to increase the number of registration certificates 20 able to be stored in the storage medium of the database.

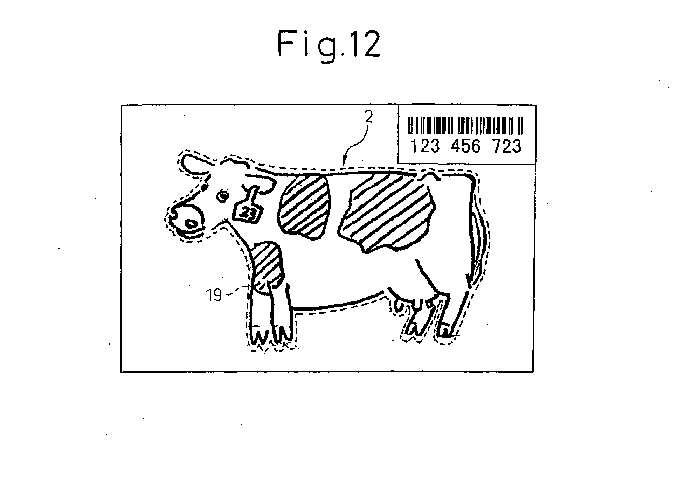

FIG. 11 shows another modification of the method of photographing an animal in the method of management of pictures of animals of the present invention. In this embodiment, a screen 17 used in the embodiment of FIG. 11 is given dimensional lines 18 enabling the size of the dairy cattle 2 to be understood. By doing this, since the dimensional lines 18 are shot together with the dairy cattle 2 in the digital picture, the general size of the dairy cattle can be confirmed from the digital picture.

Further, due to the advances in digital technology in recent years, it is possible to cut out the picture of just the dairy cattle 2 shown by the broken lines 19 from the picture of the dairy cattle 2 converted to a digital picture as shown in FIG. 3 and store a digital picture of the dairy cattle 2 by the smallest possible amount of data.

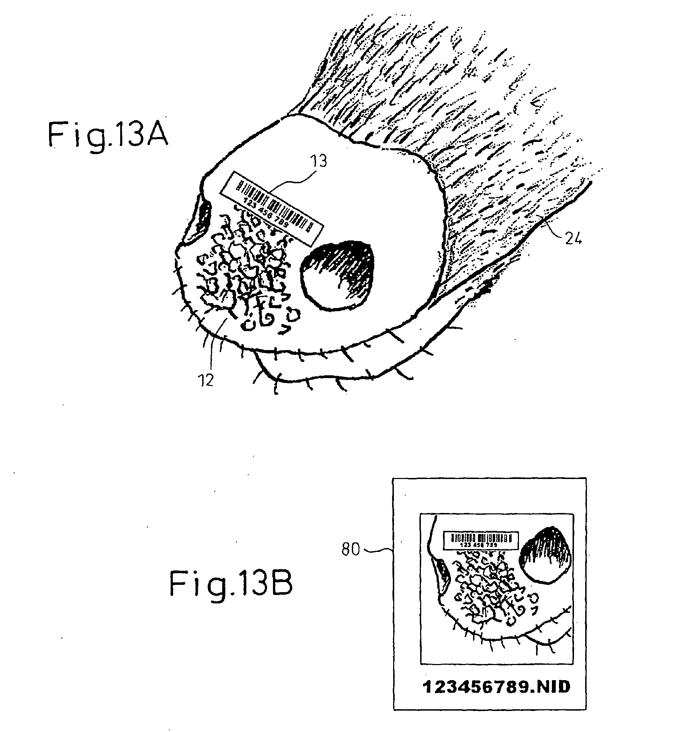

FIG. 13A shows an example of application of the method of management of pictures of animals of the present invention to the nose prints 12 of animals, for example, cattle 24. In this example, the method is shown of temporarily attaching a barcode seal 13 recording the individual identification data of the cattle 24 to the photographed range of the nose print 12 of cattle 24 and simultaneously photographing the nose print 12 and the barcode seal 13 to obtain a digital picture. The nose print 12 of the digital picture can also include the content of the barcode seal 13 read by any of the above methods. As shown in FIG. 13B, when the nose print registration certificate 80 is prepared, it is possible to include in the file name of the nose print registration certificate 80 the individual identification data of the cattle 24 recorded on the barcode seal 13.

Further, as another method of photographing the nose print 12 of the cattle 24 together with the barcode, there is also the method of preparing a card of a predetermined size, punching a hole through which the nose print 12 of the cattle 24 can be seen at the center of the card etc., printing a barcode around the hole or attaching a barcode seal there, and photographing the nose print of the cattle in the state fit into the hole of the card. In this case, the camera should be fixed in focus.

Note that when using software to read the content of a barcode seal 13, the picture data (data map) where the digital picture is stored is scanned in the vertical direction, horizonal direction, and slanted direction to obtain a predetermined number of data strings and a search is conducted as to whether there is a specific data string expressing the characteristics of a barcode in the obtained data strings. Further, when there is a data string expressing a barcode in the obtained data strings, that data string is analyzed to judge the white and black parts and thick lines and thin lines of the barcode are read from this judgment to read the content of the barcode.

Further, several methods of taking nose prints 12 have already been proposed, but in the methods up until now, numbers were input manually later to the pictures of the nose prints 12 of the digital pictures, so errors in input easily occurred. Further, the pattern of black and white spots of dairy cattle can be easily judged visually by anyone, but checking of nose prints 12 is extremely difficult. Therefore, when preparing registration certificates 80 of nose prints, if the file name includes individual identification data of the animal shown by a barcode seal 13, the reliability of the data of the nose print registration certificate 80 becomes extremely high and the preparation becomes extremely easy. As the part of the livestock enabling individual identification, there are also the pupils of the eyes of cattle etc.

Note that in the embodiments explained above, the individual identification data of dairy cattle was obtained by reading the barcode 7 from the digital picture photographed as shown in FIG. 2A and FIG. 2B, but when a number is attached to the barcode 7 as shown in FIG. 2A and FIG. 2B and the position of the number is fairly much specified, it is also possible to read the number by software having an OCR (optical character reader) function and prepare a file name of the digital picture based on the individual identification number of the animal recorded in the read number or letters.

Further, in the above explained embodiment, the explanation was given of obtaining a digital picture of an animal such as a dairy cow, reading the barcode in the digital picture, and preparing a file name of the digital picture based on the individual identification data of the animal recorded in the barcode, but the method of management of pictures of animals of the present invention is not limited to only management of pictures of animals. For example, it is also possible to obtain a digital picture of an article or other object together with a barcode, record the same, read the barcode in the digital picture, and prepare and record a file name of the digital picture based on the individual identification data of the animal recorded in the barcode.

If converting such an article to a digital picture and using the barcode in the picture to prepare a file name of the digital picture, it is possible to record pictures of articles for easy management.

Further, in the above explained embodiments, the explanation was given of simultaneously or separately photographing the barcode at the time of photographing an article or animal, but it is also possible to enable a barcode reader to be connected to a digital picture photographic apparatus and introduce the information read by a barcode reader into the photographed picture of the digital picture right after photographing the article or animal.

### INDUSTRIAL APPLICABILITY

According to the method of management of pictures and method of recording pictures of animals shown in the present invention, the following become possible.
(1) A complete match between objects such as animals and the database photographing and recording the same is achieved and a highly reliable system can be constructed. Note that in this system, when dealing with animals such as cattle having ear tags (with unique numbers attached) which cannot be changed, the system can be made higher in reliability by matching the unique numbers printed on the ear tags and the unique numbers included in the barcodes converted to digital pictures.
(2) By inserting the unique information read from the barcodes into the file names and managing them by a database, searching for an object becomes easier and sharing of the database with a third party becomes possible so the convenience is increased.
(3) When an object such as an animal is photographed together with a barcode recording the identification data of the object or separately and converted to a digital picture and the obtained digital picture is stored together with the file name in a storage medium, the barcode is read from the digital picture and the file name of the digital picture is prepared based on the data recorded in the read barcode. As a result, when a data processing apparatus manages objects in digital pictures, the file name of a file stored in the storage medium is quickly and accurately input based on the data recorded in the barcode, so file management becomes easy.
(4) The content of a barcode in a digital picture can also be read by processing the digital picture data using software and directly reading the content from the data, but it is also possible to display the picture data on a display once or print it by a printer, then read the barcode part by an existing barcode reader for input.
(5) It is also possible to photograph a number or letters recording individual data of an animal placed or electrically displayed at a specific position of a photographed picture of an animal instead of a barcode, read the number or letters by an OCR function of software, and prepare the file name of a digital picture based on that data, so preparation of the file name becomes easy.

## Claims

1. A method of managing animals by pictures comprising photographing a unique, photographable part of an animal and a barcode recording individual identification information of the animal together or separately to obtain a digital picture and managing obtained digital pictures of animals recorded together with file names in a storage medium, at which time reading the barcode from the digital picture and preparing a file name of the digital picture based on the individual identification data of the animal recorded on the barcode.

2. A method of management of pictures of animals as set forth in claim 1, comprising, when photographing an animal together with a barcode recording individual identification data of the animal, photographing the barcode placed at a predetermined specific position, reading the barcode from the digital picture, and analyzing by software the digital data of an address corresponding to a specific position of the storage area of the storage medium.

3. A method of management of pictures of animals as set forth in claim 1, comprising a step of reading the barcode from the digital picture and scanning the picture data of the digital picture in the vertical direction, horizontal direction, and slanted direction to obtain a predetermined number of data strings, a step of searching for whether there is a specific data string expressing characteristics of a barcode in the obtained data strings, and a step of analyzing a data string when finding a data string expressing the barcode in the read data strings to read the content of the barcode.

4. A method of using a data processing apparatus to manage animals by pictures, comprising photographing an animal and a barcode recording individual identification information of the animal together or separately to obtain a digital picture and managing obtained digital pictures of animals in a data processing apparatus recorded together with file names on a storage medium, at which time displaying a digital picture on a display unit of the data processing apparatus, reading the barcode from the displayed digital picture by a barcode reader to input that data to the data processing apparatus, and preparing a file name of that digital picture recorded on a storage medium based on the individual identification data of the input animal.

5. A method of using a data processing apparatus to manage animals by pictures, comprising photographing an animal and a barcode recording individual identification information of the animal together or separately to obtain a digital picture and managing obtained digital pictures of animals in a data processing apparatus recorded together with file names on a storage medium, at which time printing the digital picture, reading the barcode in the printed picture by a barcode reader to input that data to the data processing apparatus, and preparing a file name of that digital picture recorded on a storage medium based on the individual identification data of the input animal.

6. A method of management of pictures of animals as set forth in any one of claims 1 to 5, wherein the part where the individual identification data of the animal is recorded in the file name prepared based on the individual identification data of the animal read from the barcode is made impossible to rewrite or it is made possible to confirm that the fact that it is an original picture is certified.

7. A method of management of pictures of animals as set forth in any one of claims 1 to 6, wherein the storage medium is a database connected to a computer of a management organization of a specific region and the digital picture of an animal having a file name attached prepared based on the individual identification data of the animal read from the barcode is recorded in a management ledger of the database.

8. A management method of animals as set forth in claim 7, wherein the management ledger is made public so that it may be jointly used on a computer network connected to the database.

9. A method of management of pictures of animals as set forth in any one of claims 1 to 3, wherein the file name is a file name showing a photograph number in a digital picture photographic apparatus for photographing animals having a barcode reading function.

10. A method of management of pictures comprising photographing a certain object together with a barcode recording identification data of that object together or separately to obtain a digital picture and storing obtained digital pictures together with file names in a storage medium, at which time reading a barcode from the digital picture or from a separately imaged barcode picture and incorporating a file name of that digital picture into at least part of the data recorded in the read barcode to prepare a file name.

11. A method of management of pictures comprising photographing a certain object together with a barcode recording identification data of that object together or separately to obtain a digital picture, displaying the obtained digital pictures on a display unit, reading a barcode from the displayed picture by a barcode reader, and recording and storing the photographed digital pictures together with file names in a storage medium, at which time incorporating a file name of a digital picture into at least part of the data recorded in the barcode read by the barcode reader to prepare a file name.

12. A method of managing animals by pictures comprising photographing a unique, photographable part of an animal by photographing a number or letters expressing individual identification data of that animal placed so as to be shot at a specific predetermined position of the photographed picture to obtain a digital picture and managing obtained digital pictures of animals recorded together with file names in a storage medium, at which time reading the number or letters expressing the individual identification data from a digital picture by an OCR function of software and preparing a file name of the digital picture based on individual identification data of an animal recorded in the read number or letters.

13. A method of management of pictures for managing animals by pictures as set forth in any of claims 1 to 12 and a method of recording pictures for managing objects by pictures, comprising, when obtaining a digital picture of an animal or object, including in the digital picture electronic tamperproof data preventing rewriting of digital data in the digital picture or showing that the digital data has been rewritten.

14. A method of management of pictures of animals as set forth in claim 2, wherein, when placing the barcode recording the individual identification data of an animal at a predetermined specific position and photographing this together with the animal, using a multifocus camera able to focus on at least two barcodes and locations of animals.
